# EUROPEAN PATENT SPECIFICATION

(11) **EP 1 615 402 B1**
(45) Date of publication and mention of the grant of the patent: **05.09.2007**
(21) Application number: 05090176.8
(22) Date of filing: 14.06.2005
(51) Int. Cl.: H04L 29/06, H04L 12/58

(54) **Identification and authentication system and method for a secure data exchange**
System und Verfahren zum Identifizieren und Authentifizieren zum gesicherten Datenaustausch
Système et méthode d'identification et d'authentification pour l'échange de données sécurisé

(30) Priority: 16.06.2004 CA 2471171; 16.06.2004 US 869357
(43) Date of publication of application: 11.01.2006
(73) Proprietor: Validian Corporation, Ottawa, ON K1P 5L4 (CA)
(72) Inventor: Olsen, Henrik, 1260 Nyon (CH); Maisonneuve, André, Ottawa Ontario, K1G 4J4 (CA); Benn, Bruce, Ottawa Ontario, K1P 5L4 (CA); Michalowski, Thierry, 1260 Nyon (CH)
(74) Representative: Wablat, Wolfgang

(56) References cited:
- WO-A-98/16045
- WO-A-20/04047358
- US-A1- 2003 204 720
- BILL MACHRONE: "Secure Instant Messaging" EXTREMETECH, [Online] 12 May 2004 (2004-05-12), XP002353064 Retrieved from the Internet: URL:http://www.extremetech.com/article2/0, 1558,1591343,00.asp> [retrieved on 2005-11-02]
- ANDREAS FINK, JÖRG ALBRECHT: "Entwicklung eines Secure Instant Messaging Systems für den Corporate Einsatz" TECHNISCHE UNIVERSITÄT DARMSTADT, FACHGEBIET FÜR SICHERHEIT IN DER INFORMATIONSTECHNIK, [Online] 1 March 2004 (2004-03-01), XP002353065 Darmstadt, DE Retrieved from the Internet: URL:http://www.sec.informatik.tu-darmstadt .de/lang_neutral/diplomarbeiten/docs/studi enarbeit_fa2004.pdf> [retrieved on 2005-11-02]
- HASSELMEYER P ET AL: "Trade-offs in a secure Jini service architecture" TRENDS IN DISTRIBUTED SYSTEMS: TOWARDS A UNIVERSAL SERVICE MARKET. THIRD INTERNATIONAL IFIP/GI WORKING CONFERENCE, USA 2000. PROCEEDINGS (LECTURE NOTES IN COMPUTER SCIENCE VOL.1890) SPRINGER-VERLAG BERLIN, GERMANY, [Online] 2000, pages 190-201, XP002353066 ISBN: 3-540-41024-4 Retrieved from the Internet: URL:http://www.ito.tu-darmstadt.de/publs/p df/usm00.pdf> [retrieved on 2005-10-31]
- TUOMO LAMPINEN: "Using SPKI Certificates for Authorization in CORBA based Distributed Object-Oriented Systems" PROCEEDINGS OF THE FOURTH NORDIC WORKSHOP ON SECURE IT SYSTEMS (NORDSEC'99),, [Online] 1 November 1999 (1999-11-01), XP002353067 Kista, Sweden. Retrieved from the Internet: URL:http://www.tml.tkk.fi/Research/TeSSA/P apers/Lampinen/Lampinen-NordSec99.pdf> [retrieved on 2005-10-31]

## Description

### FIELD OF THE INVENTION

The present invention relates to a system and method to facilitate the secure exchange of messages through an electronic communication network and, in particular, to a distributed architecture that allows simple scalability.

### BACKGROUND TO THE INVENTION

Secure communication of messages and data though digital communication networks has increasingly become a requirement for governments, corporations, and individuals. Cyber-terrorism, malicious hacking, and unauthorized access are among many issues relating to secure communications, and these have recently increased the focus on information and data security. The current business environment demands broad and easy access to private and public IP networks like the Internet by remote workers and partners and recognizes that this must be done within a secure environment.

In order to ensure robust security in the exchange of data, including messages, between applications, many aspects of trust and security must be present and operating. These include:
a) the application must ensure that the people accessing it are authorized to do so;
b) the application must trust that other applications sending messages or data are authorized to send these messages or data to the application;
c) the application must trust that the application sending data has not been modified since it has been authorized to send the data;
d) the application must trust that any part of any data transmission, in or out of it, is encrypted at all times and never travels in the clear at any time; and
e) the application must trust that the data it receives has not been modified during the transmit through the digital communication networks.

Various approaches and products have been developed to try to meet these requirements. Common security architectures, approaches, products and standards, such as firewalls, virtual private networks, secure socket layers (SSL), public key infrastructure (PKI), digital credentials and digital signatures generally meet some of the above requirements but still leave corporate data vulnerable to unauthorized access both by external and internal parties.

Further, these security solutions are often complex and costly to implement, costly to manage, costly to maintain, and difficult to scale. Implementations require the use of more than one product, which exacerbates the complexity and costs.

WO 98/16045 discloses a method for providing data exchange in a communication network comprising the steps of connecting a computer having an engine and an application (a user) to a communication network where exchanges only take place between engines operating within the system, registering said application with an address resolution service on said domain controller, requesting the address of a second application which said application wishes to communicate with, exchanging data with said second application.

Thus, there is a need for a system and method that provides secure, i.e. encrypted and authenticated, communication between any kind of application within a communication network.

### SUMMARY OF THE INVENTION

The present system and method provides a data security and transport infrastructure for any private and public IP-based communication network, such as the Internet. The system and method ensures the security of messages and documents during transport from one application to another. The present system facilitates the communication between distributed applications.

The present invention therefore provides an identification and authentication system for secure data exchange over a communications network with a controlled name space, said system comprising: a digital credential generation authority for creating and distributing credentials, said credentials having an expiration time; a credential revocation service for distributing a list of revoked credentials; a plurality of computers, each of said plurality of computers having: an engine for communicating over said communications network; at least one application communicating with said engine; and said list received from said credential revocation service; at least one domain controller, each of said at least one domain controller having: an engine for communicating over said communications network; an address resolution service to store a network address of said at least one application; a key distribution service for distributing keys to engines within said communications network; and a time synchronization module for synchronizing time on engines wherein each of said plurality of computers receives a non-revoked credential for one of said at least one domain controller from said digital credential generation authority authorizing each of said plurality of computers to communicate in said system, and each of said computers further communicates with one of said at least one domain controller to obtain keys for secure data exchange between applications on said system and the location of applications within said communications network.

The present invention further provides a method of providing secure data exchange in a communications network comprising the steps of: connecting a computer having an engine and at least one application to a communications network; sending a request from said engine to a digital credential generation authority to obtain a credential for a domain controller; using said credential to communicate between said computer and said domain controller; registering said at least one application with an address resolution service on said domain controller; requesting the address of a second application to which said at least one application wishes to communicate with; obtaining a key from a key distribution service on said domain controller to securely exchange data with said second application; securely exchanging data with said second application using said key.

### BRIEF DESCRIPTION OF THE DRAWINGS

The present system and method is better understood with reference to the drawings in which:
Figure 1 is a schematic view of the architecture of a preferred embodiment of the present invention;
Figure 2 is a schematic view of the architecture of the preferred embodiment of the invention showing engines together with a digital credential generation authority and a digital credential generation service;
Figure 3 is a model showing the OSI model with the method and system of the present invention overlaid on this architecture; and,
Figure 4 is a schematic showing communication between two applications through the OSI model.

### DETAILED DESCRIPTION OF THE INVENTION

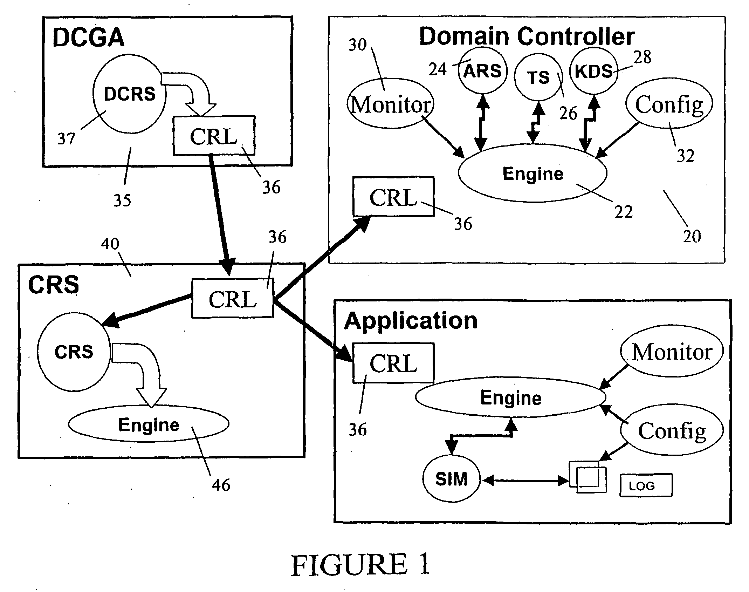

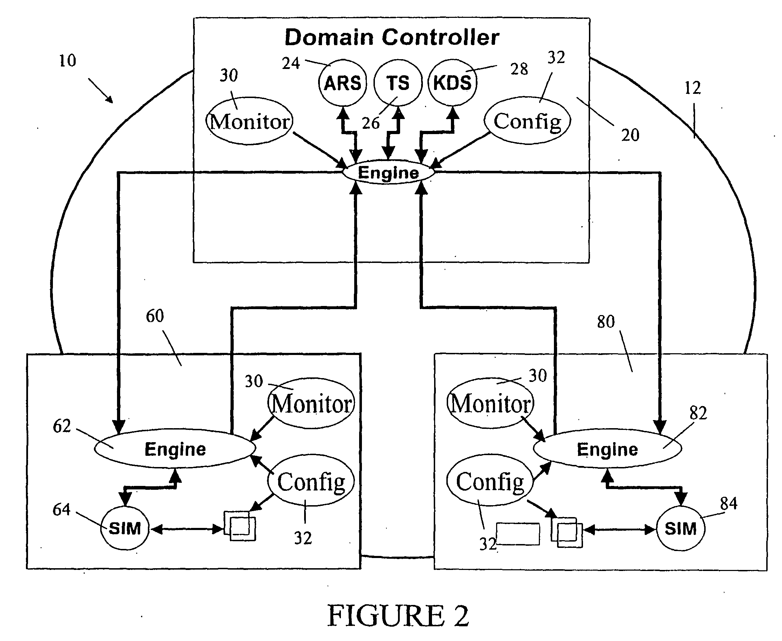

The present system provides an architecture for secure communication between applications over a network, wherein the system is easily scalable and applications can be added without network administrator intervention. Reference is now made to **Figures 1 and 2.**

A system **10** of the present invention comprises one or more domains **12**, as seen in **Figure 2** and denoted by the outer circle. A domain is defined as a group of computers linked together through a network and having a domain controller **20**. Each domain is managed by one domain controller **20**.

In order to establish a domain and authenticate a domain controller, a digital credential generation authority **35** is used. A digital credential generation authority **35** consists of a process **37** for creating digital credentials. Digital credential generation authority **35** further includes a database of revoked digital credentials and prepares a digital credential revocation list **36,** which is a list of expired digital credentials. This list is periodically distributed to entities within the system **10**, as described below and is used to ensure that domain controllers **20** are authentic.

Digital credential generation authority **35** provides the digital credential revocation list to the digital credential revocation service **40**, as seen in **Figure 1**. Credential revocation service **40** includes an engine **46** that is used to communicate with entities within system **10** and further stores the credential revocation list **36** as received from the digital credential generation authority **35.**

Digital credential generation authority **35,** through process **37,** creates credentials. Credentials can be certificates, but as one skilled in the art will appreciate, other credentials could be used. These credentials are used to authenticate a domain controller **20** within a domain **12**.

A domain controller **20** communicates through its engine **22** with engine **46** to receive the credential revocation list **36** and credentials. The purpose of domain controller **20** is to store a list of applications that are within domain **12** and to further store the location of these applications. Domain controller **20** also has time synchronization module for credential verification and also includes a key distribution service to facilitate communications on a synchronized basis between applications within domain **12**, as will be described in more detail below.

The domain controller **20** thus acts as a centralized location to provide keys and address resolution to applications within domain **12**. **Figure 1** depicts that domain controller **20** consists of several processes, which may operate on a single computer or be distributed across multiple computers. Domain controller **20** includes an engine **22** for use in communication with other engines on other computers. Communications in the present system and method can only occur between engines and all external communications, therefore, between domain controller **20** and any other computer, go through engine **22**. The engine has a unique identifier as will be described below and this identifier, rather than an IP address, is used to communicate with other engines in the computers. In one embodiment of the present invention, all engines are identical and perform the same functions. However, it is contemplated that engines may be distinguished based on the type of computer or the type of applications that they are servicing.

Domain controller **20** further includes an address resolution service **24**. Address resolution service **24** contains a list of all engines and all applications operating within a domain **12**. When an application connects to the domain **12**, it registers its current IP address with the address resolution service **24** and thereafter, the address resolution service **24** knows the IP address of the application. The address resolution service **24** can thereby indicate to one application the IP address of a second application that the first application wants to communicate with.

Domain controller **20** further includes a time synchronization module **26**. Time synchronization module **26** provides a logical time between all engines **22** within a domain **12** in order to ensure the logical time within the domains are synchronized. This is required by the fact that encryption keys are time-sensitive and expire at a given time. In order to maintain continuous running and security in the system, the time assigned to the keys must be consistent within the domain **12**.

Domain controller **20** further includes a key distribution service **28** which is used to generate, distribute and manage keys that are used within domain **12**. All communications between any elements of the domain are encrypted. All keys are generated by the key distribution service **28**.

Keys are exchanged between all elements using Kerberos or public/private key methodology. Symmetrical keys generated for sessions between engines use the Kerberos split-ticket technique, as will be known to those skilled in the art. Keys between internal elements and the domain **12** are refreshed at a period specified by a domain administrator.

Domain controller **20** further includes a monitor **30** to report on the operation of the engine **22** and further an engine configurator **32** to set up the operating conditions of engine **22**. Configurator can be used to, for example, set up encryption algorithms and key length.

**Figure 1** further illustrates a sample computer **60**. Computer **60** includes an engine **62**. As indicated above, all communications between computers are done through the engine on the computer and, thus computer **60** will receive and transmit communications through engine **62**.

Computer **60** further includes a copy of the credential revocation list **36** as received periodically from the digital credential revocation service **40**. This list is used to authenticate that domain controller **20**, which is servicing the domain **12** that computer **60** is located in, has a valid digital credential.

Computer **60** further preferably contains one ore more applications **64**. An application **64**, as shown in **Figure 1**, can comprise an instant-messaging service. However, as one skilled in the art will appreciate, other types of applications are envisioned for the present system and method and could include, for example, secure remote file management systems, secure web browsers, secure voice-over IP, secure end-user 2- or 3- factor authentication processes. The present method and system contemplates other applications and contemplates the use of multiple applications on one computer. Each application would connect to engine **62**.

Thus, a computer with a running engine **62** and a number of applications linked to that engine is a "node" of domain **12**, managed and controlled by domain controller **20**. Nodes can exist simultaneously on public and/or on private networks and on different computers. Engine **62** handles all the traffic of the applications that reside on the same computer and engine **62** is enabled to work with the applications to send and receive data.

Engine **62** encrypts and decrypts data from and to the applications using one of multiple encryption algorithms as known to those skilled in the art. All messages destined to, or received from any other uniquely-identified applications are thus encrypted and decrypted.

Reference is now made to **Figure 2**. **Figure 2** shows a sample domain **12** which includes two computers **60** and **80** respectively. Domain **12** further includes a domain controller **20**. As one skilled in the art will appreciate, the example of **Figure 2** is meant to be illustrative of the present invention and is not meant to limit the scope of the present invention. Specifically, the present invention is not meant to be limited to two computers, nor is it meant to be limited to one application per computer.

Computer **60** includes an engine **62** for communicating with other engines within domain **12**. Similarly, computer **80** contains an engine **82** for communicating with other engines within system **10**. An application **64** communicates through engine **62** and an application **84** communicates through engine **82**. In the present example of **Figure 2**, applications **64** and **84** are instant-messaging services.

In operation, computer **60** through engine **62** communicates with credential revocation service **40** which, in turn, communicates with the digital credential generation authority **35** to obtain the credential for the domain controller of the domain **12** that computer **60** is part of. Once it receives this information, computer **60** can communicate with domain controller **20** using public/private key communication. When an application **64** is started, it indicates to engine **62** that it has been added to the system and engine **62** communicates with engine **22** of domain controller **20**. Address resolution service **24** receives the address of the application and records that the application exists within the system.

Similarly, computer **80** through engine **82** communicates with credential revocation service **40** which, in turn, communicates with the digital credential generation authority **35** to obtain the credential for the domain controller of the domain **12** that computer **80** is part of. Once it receives this information, computer **80** can communicate with domain controller **20** using public/private key communication. When an application **84** is started, it indicates to engine **82** that it has been added to the system and engine **82** communicates with engine **22** of domain controller **20**. Address resolution service **24** receives the address of the application and records that the application exists within the system.

Only one engine need operate on a given machine, with each engine of each machine being uniquely identified. Many applications on a given machine use the same engine to link to other applications within domain **12.**

The time from time synchronization module **26** is further propagated to engines **62** and **82.** Key distribution service **28** further generates keys that are sent to engines **82** and **84** using a standard split-ticket Kerberos protocol session, as will be known to those skilled in the art. Every time an application wants to exchange data with another application within domain **12**, a unique session key is generated by key distribution service **28** in order to encrypt the data of that exchange.

In the present example of **Figure 2,** application **64** wishes to communicate with application **84**. Key distribution service **28** generates a unique key and, through the private key of computer 1 and computer 2, encrypts this key and passes it to both. Only the two applications exchanging data know this session key since they can decrypt the key. No one anywhere else knows this key, thus providing for secure communication.

In order to communicate, the first application passes data to its engine **62** which then encrypts the data to be sent. Data is carried from engine **62** to engine **82** in a point-to-point manner over a digital communication network such as the Internet. The present invention is not, however, meant to be limited to the Internet, and any other network or means of communicating between computers under the control of a specific name space is contemplated.

Once the data is received at engine **82**, it is decrypted and transferred to application **84**.

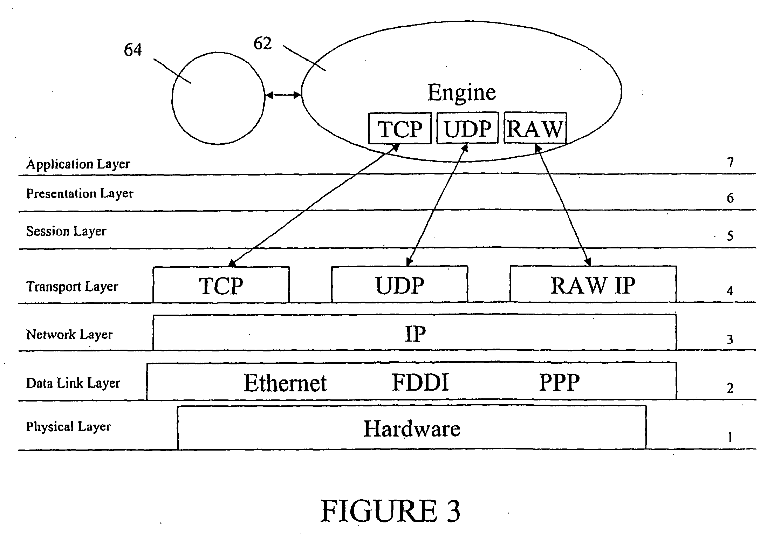

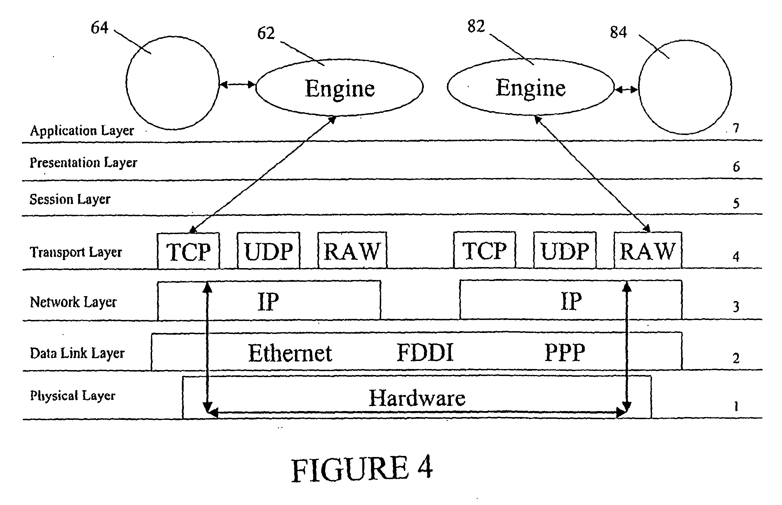

As seen in **Figures 3** and **4**, the present invention controls and ensures data proceeds through the transport layer, the network layer, the data link layer to the physical layer, at which point the data is transferred to the second computer **80** and passed through the data link layer, the network layer and transfer layer to engine **82**. The data remains encrypted throughout each of these layers until it reaches the application layer, at which point it is decrypted. Since it is at the application layer that data is decrypted, the method and system herein can operate on any wired or wireless network as messages are encrypted until the application layer and are, therefore, immune to eavesdropping by third parties.

As one skilled in the art will realize, other computers can be added to this system and each will contain an engine and may contain one or more applications communicating with that engine. These computers will similarly register with domain controller **20** through their engines after the engine and domain controller are authenticated using the digital credential generation authority **35**.

Thus, domain controller **20** ensures that all entities operating within its domain **12** are properly registered, have authenticated domain controller 20 and have been authenticated by same the domain controller **20**. It prevents any unauthorized, unauthenticated or unknown element from carrying any data to any of these entities. Domain controller **20** ensures that applications communicate securely with one another through unique encryption keys known only to the communicating applications.

One embodiment of the present invention, a proprietary addressing scheme, is used to regulate communications within system **10**. Exchanges can only take place between engines authorized to operate within system **10** and this is regulated through this proprietary addressing scheme. Messages that do not use the proprietary addressing scheme are ignored, thereby reducing the chances of a successful attack on system **10** from outside sources.

A proprietary addressing scheme assigns a "Receiver" within engine **22** an address in order to receive messages from "Transmitters". Transmitters have no addresses, as they are used for sending messages only. Addresses do not identify the processes that exchange data as processes are identified at the application level.

In one embodiment of the invention, all receivers on one computer have unique identifiers within this computer, referred to herein as Receiver_ID. All computers in a domain **12** have unique identifiers within this domain and are assigned a Computer_ID. Further, all domains **12** within a given digital credential revocation service **40** environment have unique identifiers referred to as Domain_ID.

Based on the above, a receiver's address will look like Domain_ID/Computer_ID/Receiver_ID. Alternatively, applications can create identification for receivers using aliases. The name of the receiver is the alias name for some part of the address, for example, Domain_ID/Alias_Name

For the effective operation of system **10**, the address of a receiver consists of various elements to ensure the correct delivery of messages transported through system **10** and to exclude double-address resolution.

In a preferred embodiment, Domain_ID identifier of a domain uses either text line in DNS format or by a 32-bit IP address in dword format. The Computer_ID is the computer identifier and is preferably a 32-bit number in dword format. The Receiver_ID is a unique number used by the local component of system **10** to control the incoming local message flows and is preferably a 32-bit number in dword format. The Alias name is a receiver Alias name or service name or unique name within the system **10.** It is introduced in the text line format and contains either a unique name or a text representation of 128-bit number in hex-decimal notation.

In the preferred system, services can create receivers with different degrees of name uniqueness in order to control the quantity and configuration of these services within the domain and computer.

As described above, in order for an application to interact on domain **12**, it must first register with domain controller **20**. This is accomplished by registering the application with address resolution service **24**. Address resolution service **24** assigns the application a unique address according to the proprietary addressing scheme described above.

To enable domain controller **20** to route and deliver messages correctly, system **10** contains a receiver's address. The address space of the engine **62** is mapped to the address space of the network upon which system **10** is implemented, for example to the IP network address space of the Internet

The infrastructure of the present system provides for symmetrical encryption of the data and is, thus, faster than systems which use asymmetrical encryption that are common within the digital credential-based authentication mechanisms used currently, such as public key infrastructures. These keys are securely passed to both applications on a standard split-ticket Kerberos protocol session as described above.

System **10** is largely self-managed, as all mutual authentication and key exchanges are performed internally and automatically, without requiring outside intervention. A new engine coming into a domain **12** will find, through the digital credential revocation service **40**, the location and public key of its domain controller **20**. It can then communicate with domain controller **20** to establish communications with other engines within domain **12**.

The combination of these processes is a novel way to greatly facilitate exchange data between applications and can be performed through any IP-based networks or through any communications network under the control of a specific name space. Further, no external certification authority is required as all parties to a communication are authenticated within system **10**.

Network management in the present method and system is simplified over the prior art by making applications independent of their physical location on the network and thus eliminating the requirement of changing this physical location in the case of a change in the application location or of the network topology. Specifically, an application, when brought on-line, registers with the address resolution service **22** and, thereafter, system **10** knows the location of that application under the control of the specific name space of the specific network.

The present system further facilitates presence management since an engine registers the IP address of any application present on the system with the address resolution service **24**. This information can be passed to other applications present in the same domain **12** at the same time.

IP address independence is further achieved through the use of an addressing scheme assigning unique logical addresses instead of specific addresses in the name space of the supporting network.

The above is meant to be illustrative of the present system and method, and is not meant to limit the present system and method. This system and method are only meant to be limited by the claims below.

## Claims

1. An identification and authentication system for secure data exchange over a communications network with a controlled name space, said system (10) comprising:
a) a digital credential generation authority (35) for creating and distributing credentials, said credentials having an expiration time;
b) means for a credential revocation service (40) for distributing a list (36) of revoked credentials;
c) a plurality of computers (60, 80), each of said plurality of computers (60, 80) having:
i. an engine (62, 82) for securely communicating over said communications network;
ii. means for storing at least one application (64, 84) communicating with said engine (62, 82); and
iii. means for storing said list (36) received from said credential revocation service (40);
d) at least one domain controller (20), each of said at least one domain controller (20) having:
i. an engine (22) for securely communicating over said communications network;
ii. means for an address resolution service (24) to store a network address of said at least one application (64, 84);
iii. means for a key distribution service (28) for distributing keys to engines (22, 62, 82) within said communications network; and
iv. a time synchronization module (26) for synchronizing time on engines (22, 62, 82),
wherein each of said plurality of computers is adapted to receive a non-revoked credential for one of said at least one domain controller (20) from said digital credential generation authority (35) authorizing each of said plurality of computers (60, 80) to communicate in said system, and each of said computers further is adapted to communicate with one of said at least one domain controller (20) to obtain keys for secure data exchange between applications (64, 84) on said system (10) and the location of applications within said communications network.

2. The system of claim 1, wherein said at least one application (64, 84) is adapted to communicate with said engine (62, 82) through an application layer on said plurality of computers (60, 80).

3. The system of claim 1 or 2, wherein said credential is a digital credential issued internally.

4. The system of any of claims 1 to 3, wherein said credential is only valid if it is not within the list (36) of revoked credentials.

5. The system of any of claims 1 to 4, wherein said keys for secure data exchange between applications (64, 84) are symmetric keys.

6. The system of any of claims 1 to 5, wherein said key distribution service (28) is adapted to distribute said key to said engines using a split-ticket Kerberos session.

7. The system of any of claims 1 to 6, wherein communications between applications (64, 84) uses an addressing scheme.

8. The system of claim 7, wherein the addressing scheme includes a unique identifier to identify a receiver on an engine (62, 82) within said plurality of computers (60, 80).

9. The system of claim 8, wherein the unique identifier includes a domain identifier for the domain of the receiver.

10. The system of claim 8 or 9, wherein the unique identifier includes a computer identifier.

11. The system of any of claims 8 to 10, wherein the unique identifier includes a receiver identifier.

12. The system of claim 9, wherein the unique identifier further includes an alias name for the receiver.

13. The system of any of claims 1 to 12, wherein said system (10) is adapted to perform all mutual authentication and key exchanges internally.

14. The system of any of claims 1 to 13, wherein the address resolution service (24) is adapted to record a movement of an application (64, 84) to a new address network, thereby simplifying dynamic network management.

15. A method of providing secure data exchange for use in a communications network comprising the steps of:
a. connecting a computer (60, 80) having an engine (62, 82) and at least one application (64, 84) to a communications network with a controlled name space;
b. sending a request from said engine (62, 82) to a digital credential generation authority (35) to obtain a credential for a domain controller (20);
c. receiving a non-revoked credential at said computer (60, 80);
d. using said credential to perform authentication by said computer (60, 80) of said domain controller (20);
e. registering said at least one application with an address resolution service (24) on said domain controller (20);
f. requesting the address of a second application (84, 64) to which said at least one application (64, 84) wishes to communicate with;
g. obtaining a key from a key distribution service (28) on said domain controller (20) to encrypt and thus securely exchange data with said second application (84, 64);
h. securely exchanging data with said second application (84, 64) using said key.

16. The method of claim 15 wherein the step of securely exchanging data uses a symmetrical encryption key.

17. The method of claim 15 or 16, wherein the obtaining step uses a split-ticket Kerberos session to distribute said key.

## Patentansprüche

1. Identifizierungs- und Authentifizierungssystem zum sicheren Datenaustausch über ein Kommunikationsnetzwerk mit einem kontrollierten Namensbereich, wobei das System (10) umfasst:
a) eine Erzeugungsautorität (35) digitaler Berechtigungsnachweise (credentials) zum Herstellen und Verteilen von Berechtigungsnachweisen, wobei die Berechtigungsnachweise eine Ablaufzeit aufweisen;
b) Mittel für einen Berechtigungsnachweis-Widerrufsdienst (40) zum Verteilen einer Liste (36) widerrufener Berechtigungsnachweise;
c) mehrere Computer (60, 80), wobei jeder der mehreren Computer (60, 80) aufweist:
i. eine Maschine (62, 82) zum sicheren Kommunizieren über das Kommunikationsnetzwerk;
ii. Mittel zum Speichern wenigstens einer Applikation (64, 84), welche mit der Maschine (62, 82) kommuniziert; und
iii. Mittel zum Speichern der Liste (36), welche von dem Berechtigungsnachweis-Widerrufsdienst (40) empfangen wird;
d) wenigstens einen Domain Controller (20), wobei der wenigstens eine Domain Controller (20) je aufweist:
i. eine Maschine (22) zum sicheren Kommunizieren über das Kommunikationsnetzwerk;
ii. Mittel für einen Adressenauflösungsdienst (24) zum Speichern einer Netzwerkadresse der wenigstens einen Applikation (64, 84);
iii. Mittel für einen Schlüsselverteilungsdienst (28) zum Verteilen von Schlüsseln an Maschinen (22, 62, 82) innerhalb des Kommunikationsnetzwerks; und
iv. ein Zeitsynchronisierungsmodul (26) zum Synchronisieren von Zeit auf Maschinen (22, 62, 82),
wobei jeder der mehreren Computer angepasst ist, einen nicht widerrufenen Berechtigungsnachweis für einen der wenigstens einen Domain Controller (20) von der Erzeugungsautorität (35) digitaler Berechtigungsnachweise zu empfangen, welche jeden der mehreren Computer (60, 80) autorisiert, in dem System zu kommunizieren, und jeder der Computer ferner angepasst ist, mit einem der wenigstens einen Domain Controller (20) zu kommunizieren, um Schlüssel für sicheren Datenaustausch zwischen Applikationen (64, 84) auf dem System (10) und den Ort von Applikationen innerhalb des Kommunikationsnetzwerks zu erhalten.

2. System nach Anspruch 1, wobei die wenigstens eine Applikation (64, 84) angepasst ist, mit der Maschine (62, 82) durch eine Applikationsschicht auf den mehreren Computern (60, 80) zu kommunizieren.

3. System nach Anspruch 1 oder 2, wobei der Berechtigungsnachweis ein intern ausgegebener digitaler Berechtigungsnachweis ist.

4. System nach einem der Ansprüche 1 bis 3, wobei der Berechtigungsnachweis nur gültig ist, wenn es sich nicht innerhalb der Liste (36) widerrufener Berechtigungsnachweis befindet.

5. System nach einem der Ansprüche 1 bis 4, wobei die Schlüssel zum sicheren Datenaustausch zwischen Applikationen (64, 84) symmetrische Schlüssel sind.

6. System nach einem der Ansprüche 1 bis 5, wobei der Schlüsselverteilungsdienst (28) angepasst ist, den Schlüssel an die Maschinen unter Verwendung einer Split-Ticket-Kerberos-Session zu verteilen.

7. System nach einem der Ansprüche 1 bis 6, wobei Kommunikation zwischen Applikationen (64, 84) ein Adressierungsschema verwendet.

8. System nach Anspruch 7, wobei das Adressierungsschema eine eindeutige Identifikation enthält, zum Identifizieren eines Empfängers auf einer Maschine (62, 82) innerhalb der mehreren Computer (60, 80).

9. System nach Anspruch 8, wobei die eindeutige Identifikation eine Domainidentifikation für die Domain des Empfängers enthält.

10. System nach Anspruch 8 oder 9, wobei die eindeutige Identifikation eine Computeridentifikation enthält.

11. System nach einem der Ansprüche 8 bis 10, wobei die eindeutige Identifikation eine Empfängeridentifikation enthält.

12. System nach Anspruch 9, wobei die eindeutige Identifikation ferner einen Alias-Namen für den Empfänger enthält.

13. System nach einem der Ansprüche 1 bis 12, wobei das System (10) angepasst ist, das gesamte gegenseitige Austauschen von Authentifizierungen und Schlüsseln intern durchzuführen.

14. System nach einem der Ansprüche 1 bis 13, wobei der Adressenauflösungsdienst (24) angepasst ist, eine Übersiedlung einer Applikation (64, 84) zu einer neuen Netzwerkadresse aufzuzeichnen, wodurch dynamische Netzwerkverwaltung vereinfacht wird.

15. Verfahren zum Bereitstellen sicheren Datenaustauschs zur Verwendung in einem Kommunikationsnetzwerk, umfassend die Schritte:
a) Verbinden eines Computers (60, 80), welcher eine Maschine (62, 82) und wenigstens eine Applikation (64, 84) aufweist, mit einem Kommunikationsnetzwerk mit einem kontrollierten Namensbereich;
b) Senden einer Anforderung von der Maschine (62, 82) an eine Erzeugungsautorität (35) digitaler Berechtigungsnachweise, um einen Berechtigungsnachweis für einen Domain Controller (20) zu erhalten;
c) Empfangen eines nicht widerrufenen Berechtigungsnachweises an dem Computer (60, 80);
d) Verwenden des Berechtigungsnachweises, um eine Authentifizierung, durch den Computer (60, 80), des Domain Controllers (20), durchzuführen;
e) Registrieren der wenigstens einen Applikation bei einem Adressenauflösungsdienst (24) auf dem Domain Controller (20);
f) Anfordern der Adresse einer zweiten Applikation (84, 64), mit welcher die wenigstens eine Applikation (64, 84) zu kommunizieren wünscht;
g) Erhalten eines Schlüssels von einem Schlüsselverteilungsdienst (28), auf dem Domain Controller (20), zum Verschlüsseln, und **dadurch** zum sicheren Austauschen, von Daten mit der zweiten Applikation (84, 64);
h) sicheres Austauschen von Daten mit der zweiten Applikation (84, 64) unter Verwendung des Schlüssels.

16. Verfahren nach Anspruch 15, wobei der Schritt des sicheren Austauschen von Daten einen symmetrischen Verschlüsselungsschlüssel verwendet.

17. Verfahren nach Anspruch 15 oder 16, wobei der Schritt des Erhaltens eine Split-Ticket-Kerberos-Session verwendet, um den Schlüssel zu verteilen.

## Revendications

1. Système d'identification et d'authentification pour l'échange de données sécurisé sur un réseau de communication avec un espace de nom contrôlé, ledit système (10) comprenant:
a) une autorité de génération de justificatif d'identité numérique (35) pour créer et distribuer des justificatifs d'identité, lesdits justificatifs d'identité ayant une heure d'expiration ;
b) des moyens pour un service de révocation de justificatif d'identité (40) pour distribuer une liste (36) de justificatifs d'identité révoqués ;
c) une pluralité d'ordinateurs (60, 80), chacun de ladite pluralité d'ordinateurs (60, 80) ayant :
i. un moteur (62, 82) pour communiquer en toute sécurité sur ledit réseau de communication ;
ii. des moyens pour stocker au moins une application (64, 84) communiquant avec ledit moteur (62, 82) ; et
iii. des moyens pour stocker ladite liste (36) reçue dudit service de révocation de justificatif d'identité (40) ;
d) au moins un contrôleur de domaine (20), chacun dudit au moins un contrôleur de domaine (20) ayant :
i. un moteur (22) pour communiquer en toute sécurité sur ledit réseau de communication ;
ii. des moyens pour un service de résolution d'adresse (24) pour stocker une adresse de réseau de ladite au moins une application (64, 84) ;
iii. des moyens pour un service de distribution de clé (28) pour distribuer des clés aux moteurs (22, 62, 82) à l'intérieur dudit réseau de communication ; et
iv. un module de synchronisation de temps (26) pour synchroniser le temps sur les moteurs (22, 62, 82),
dans lequel chacun de ladite pluralité d'ordinateurs est adapté pour recevoir un justificatif d'identité non révoqué pour l'un dudit au moins un contrôleur de domaine (20) de ladite autorité de génération de justificatif d'identité numérique (35) autorisant à chacun de ladite pluralité d'ordinateurs (60, 80) de communiquer dans ledit système, et chacun desdits ordinateurs est en outre adapté pour communiquer avec l'un dudit au moins un contrôleur de domaine (20) pour obtenir des clés pour sécuriser l'échange de données entre les applications (64, 84) sur ledit système (10) et l'emplacement des applications à l'intérieur dudit réseau de communication.

2. Système selon la revendication 1, dans lequel au moins une application (64, 84) est adaptée pour communiquer avec ledit moteur (62, 82) à travers une couche d'application sur ladite pluralité d'ordinateurs (60, 80).

3. Système selon la revendication 1 ou 2, dans lequel ladite justificatif d'identité est un justificatif d'identité numérique émise en interne.

4. Système selon l'une quelconque des revendications 1 à 3, dans lequel ledit justificatif d'identité est uniquement valable s'il ne se trouve pas à l'intérieur de la liste (36) des justificatifs d'identité révoqués.

5. Système selon l'une quelconque des revendications 1 à 4, dans lequel lesdites clés pour sécuriser l'échange de données entre les applications (64, 84) sont des clés symétriques.

6. Système selon l'une quelconque des revendications 1 à 5, dans lequel ledit service de distribution de clé (28) est adapté pour distribuer ladite clé aux dits moteurs en utilisant une pension de Kerberos à division de ticket.

7. Système selon l'une quelconque des revendications 1 à 6, dans lequel les communications entre les applications (64, 84) utilisent une logique d'adressage.

8. Système selon la revendication 7, dans lequel la logique d'adressage comprend un identifiant unique pour identifier un récepteur sur un moteur (62, 82) à l'intérieur de ladite pluralité d'ordinateurs (60, 80).

9. Système selon la revendication 8, dans lequel l'identifiant unique comprend un identifiant de domaine pour le domaine du récepteur.

10. Système selon la revendication 8 ou 9, dans lequel l'identifiant unique comprend un identifiant d'ordinateur.

11. Système selon l'une quelconque des revendications 8 à 10, dans lequel l'identifiant unique comprend un identifiant de récepteur.

12. Système selon la revendication 9, dans lequel l'identifiant unique comprend en outre un nom d'alias pour le récepteur.

13. Système selon l'une quelconque des revendications 1 à 12, dans lequel ledit système (10) est adapté pour effectuer tous les échanges réciproques d'authentification et de clé en interne.

14. Système selon l'une quelconque des revendications 1 à 13, dans lequel le service de résolution d'adresse (24) est adapté pour enregistrer un déplacement d'une application (64, 84) à une nouvelle adresse de réseau, ce qui simplifie la gestion de réseau dynamique.

15. Procédé assurant l'échange de données sécurisé à utiliser dans un réseau de communication comprenant les étapes consistant à :
a. connecter un ordinateur (60, 80) ayant un moteur (62, 82) et au moins une application (64, 84) à un réseau de communication avec un espace de nom contrôlé ;
b. envoyer une requête dudit moteur (62, 82) à une autorité de génération de justificatif d'identité numérique (35) pour obtenir un justificatif d'identité pour un contrôleur de domaine (20) ;
c. recevoir un justificatif d'identité non révoqué au niveau dudit ordinateur (60, 80) ;
d. utiliser ledit justificatif d'identité pour effectuer l'authentification par ledit ordinateur (60, 80) dudit contrôleur de domaine (20) ;
e. enregistrer ladite au moins une application auprès d'un service de résolution d'adresse (24) sur ledit contrôleur de domaine (20) ;
f. demander l'adresse d'une seconde application (84, 64) avec laquelle ladite au moins une application (64, 84) souhaite communiquer ;
g. obtenir une clé d'un service de distribution de clé (28) sur ledit contrôleur de domaine (20) pour crypter et ainsi échanger en toute sécurité des données avec ladite seconde application (84, 64) ;
h. échanger en toute sécurité des données avec ladite seconde application (84, 64) en utilisant ladite clé.

16. Procédé selon la revendication 15, dans lequel l'étape d'échange de données sécurisé utilise une clé de cryptage symétrique.

17. Procédé selon la revendication 15 ou 16, dans lequel l'étape d'obtention utilise une session de Kerberos à division de ticket pour distribuer ladite clé.
